# EUROPEAN PATENT APPLICATION

(11) **EP 4 640 457 A1**
(43) Date of publication of application: **29.10.2025**
(21) Application number: 24172592.8
(22) Date of filing: 25.04.2024
(51) Int. Cl.: B60J 1/20

(54) **ROLLER BLIND ASSEMBLY**

(71) Applicant: Inalfa Roof Systems Group B.V., 5807 GW Oostrum (NL)
(72) Inventor: van Nellen, Marcel, 5807 GW Oostrum (NL)
(74) Representative: De Vries & Metman

(57) **Abstract**

Roller blind assembly comprising a winding tube (22) configured to be directly driven by a motor (27), a rollo screen (20) and an operating beam (24) and a pair of parallel rollo guides (28) for guiding the rollo screen (20). The rollo screen (20) is movable along the rollo guides (28) between a closed position and an opened position by driving the winding tube (22). The assembly further including wire pulleys (25, 25') on opposite outer ends of the winding tube (22), a springlike element (31) having a pulley (33, 33') arranged on each respective outer end and tensioning wires (30, 30') connected at first ends to one of the respective wire pulleys (25, 25') and connected at second ends to the operating beam (24). And wherein the tensioning wires (30,30') run along the pulleys (33,33') of the springlike element (31) such that the springlike element (31) tensions the tensioning wires (30, 30').

## Description

The present invention relates to a roller blind assembly and in a particular to a direct driven roller blind assembly.

### BACKGROUND

Vehicles, such as e.g. passenger cars, may be equipped with a roof or roof system having one or more roof panels. The roof panels may be movable between closed and open positions wherein a roof opening is covered or uncovered, or the one or more roof panels may be fixed. In either case, one or more of the roof panels may be transparent to allow light to enter a passenger compartment of the vehicle. In order to be able to control the amount of light entering, the vehicle may be equipped with a roller blind assembly including a rollo screen i.e. blind screen that is movable between closed and open positions, and any position therebetween i.e. partially closed or partially open. Movement of the rollo screen is enabled by wounding on or off a winding tube or shaft. In a fully opened position, the rollo screen is completely wound upon the winding tube. In the closed position, the blind screen is, almost, completely wound off from the winding tube. The roller blind assembly may also be referred to as a rollo assembly, likewise a blind screen may be referred to as a rollo screen.

In known roller blind assemblies the blind screen may be operated by drive cables driven by a motor, which drive cables are connected via slide shoes to an operating beam of the rollo screen. The operating beam may also be referred to as a pull beam, as it may pull the rollo screen, or it may further be referred to as a front beam, this in relation to its position relative to the front of the vehicle. The motor will drive movement of the drive cables, thereby moving the drive shoes and connected operating beam. Hence, pulling the pull beam away from the winding tube will roll off the rollo screen from the winding tube. Whereas pulling the pull beam towards the winding tube will allow the rollo screen to wind up on the winding tube. Thereto, the winding tube is usually provided with a springlike assembly to enable the winding up of the rollo screen when uncovering the roof opening by the rollo screen.

In another type of roller blind assemblies, the movement of the rollo screen is operated by a motor directly driving the winding tube of the rollo screen, instead of driving movement of the slide shoes and connected pull beam. In this type of roller blind assembly, also referred to as direct driven rollo DDR assembly, no springlike assembly is required in the winding tube, allowing a reduction in inner diameter of the winding tube and therewith height i.e. z-package of the rollo assembly. In order to ensure that the pull beam moves in a synchronized manner with the winding up or off of the rollo screen, tensioning wires are provided and connected within the pull beam to facilitate movement of the pull beam in alignment with the rotational movement of the winding tube and associated movement of the rollo screen. To ensure that such tensioning wires maintain tension they are connected to one another via springlike element within the pull beam. This increases the required inner diameter of the pull beam and therewith increases the required z-package. This counters the z-package reduction gained by eliminating the springlike element in the winding tube.

Accordingly, there is a need to improve the reduction in the required z-package.

### SUMMARY OF INVENTION

It is an object of the invention to provide a direct driven roller blind assembly alleviating the above-mentioned drawback.

In one aspect, the invention relates to a roller blind assembly comprising a winding tube configured to be directly driven by a motor, a rollo screen configured to be wound up and off on the winding tube at one side and having an operating beam at an opposite side, and a pair of parallel rollo guides for guiding the rollo screen. Wherein the rollo screen is movable along the rollo guides between a closed position and an opened position by driving the winding tube. Further comprising wire pulleys on opposite outer ends of the winding tube, a springlike element having a wire return element arranged on each respective outer end and tensioning wires connected at first ends to one of the respective wire pulleys and connected at second ends to the operating beam. And wherein the tensioning wires run along the wire return elements of the springlike element such that the springlike element tensions the tensioning wires.

In a further aspect, the invention relates to a roller blind assembly further comprising at least two pair of wire guide elements for guiding each of the tensioning wires from one respective wire pulley through or along the rollo guides via the respective wire return element of the springlike element towards a respective outer end of the operating beam.

In another aspect, the invention relates to a roller blind assembly wherein the springlike element is arranged at a front of the rollo assembly.

In yet another aspect, the invention relates to a roller blind assembly wherein the springlike element is arranged to the rear of the rollo assembly, and further arranged in front of the winding tube or in rear of the winding tube.

In another aspect, the invention relates to a roller blind assembly as disclosed and further comprising a control unit configured for monitoring an operating parameter of the motor indicative of speed of the winding tube, detecting whether the operating parameter crosses a threshold value, and generating a trigger signal for stopping the motor from driving the winding tube in response to the detection of a threshold crossing.

In a further aspect, the invention relates to a roof and roller blind assembly for a vehicle, comprising: a roof assembly comprising a transparent and/or movable roof panel, and a roller blind assembly as disclosed.

Particular embodiments of the invention are set forth in the dependent claims.

Further aspects, effects and details of particular embodiments of the invention are described in the following detailed description of a number of exemplary embodiments, with reference to the drawings.

### BRIEF DESCRIPTION OF DRAWINGS

By way of example only, the embodiments of the present disclosure will be described with reference to the accompanying drawings, wherein:
FIG. 1 illustrates a perspective view of an example of a vehicle roof with an open roof assembly and roller blind assembly;
FIG. 2 illustrates a perspective view of an example of a roller blind assembly in accordance with the invention for use with the roof assembly of Fig. 1,
FIG. 3 illustrates schematically an exploded view of the rollo assembly of Fig. 2 in accordance with the invention;
FIG. 4 illustrates schematically an exploded view of another embodiment of a roller blind assembly in accordance with the invention; and
FIG. 5 illustrates schematically an exploded view of a yet another embodiment of a roller blind assembly in accordance with the invention.

### DETAILED DESCRIPTION

In the following description spatial references as, for example, front, side and rear, or underneath, below and above, or forward and rearward direction and driving movement, are made with regard to the general orientation of a vehicle, such as a passenger car. And in particular to a driver behind a steering wheel of such as vehicle. In addition, X-, Y- and Z-direction will refer to a direction corresponding to length, width and height of a vehicle. In the figures, a forward driving movement of a vehicle may e.g. be indicated by an arow D1, pointing in a direction towards a front side of vehicle.

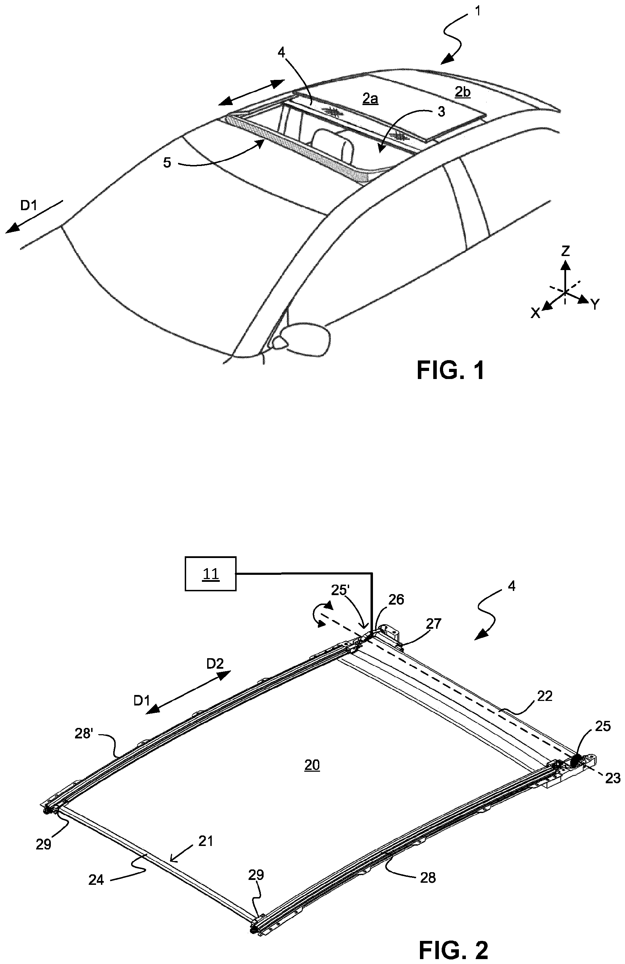

Fig. 1 illustrates a vehicle roof having an open roof assembly 1 arranged therein. The open roof assembly 1 includes a moveable panel 2a and a fixed panel 2b. The moveable panel 2a is also referred to as a closure member, since the moveable panel 2a is moveable over a roof opening 3 such to enable to open and to close the roof opening 3. A wind deflector 5 is arranged at a front side of the roof opening 3. Below the vehicle roof, a roller blind assembly i.e. rollo assembly 4 is located having a sunscreen or blind screen, which is movable between a closed and an open position. This allows to control the amount of daylight the interior is exposed to through the roof opening 3 or, in case of a transparent panel 2a, through the panel 2a.

In the illustrated embodiment, the moveable panel 2a may be in a closed position, which is a position wherein the moveable panel 2a is arranged over and closes the roof opening 3 and thus usually is arranged in a plane of the vehicle roof 1. Further, the moveable panel 2a may be in a tilted position, which is a position wherein a rear end of the moveable panel 2a is raised as compared to the closed position, while a front end of the moveable panel 2a is still in the closed position. Further, the moveable panel 2a may be in an open position, which is a position wherein the moveable panel 2a is slid open and the roof opening 3 is partially or completely exposed. In the open position, for example both the rear end and front end may be raised as compared to the closed position.

In other embodiments, instead of one or more movable panels, the panels 2a and 2b may both be fixed or there may be a single panel that is fixed. In any of these embodiments a rollo assembly as described in more detail below may be implemented.

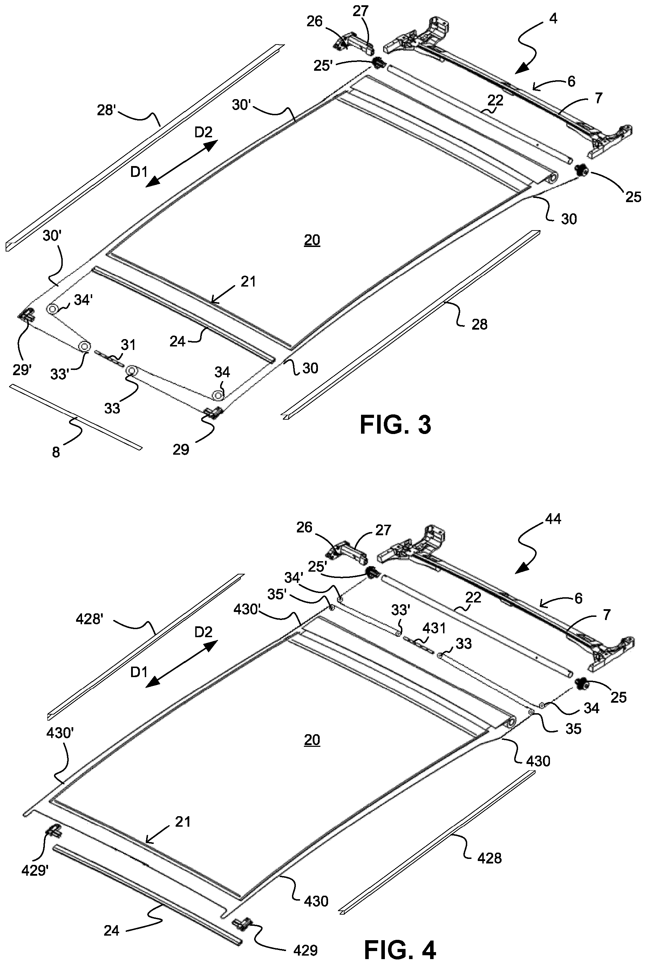

Referring to Figs. 2 and 3, the rollo assembly 4 of Fig. 1 is shown in more detail. In Fig. 2 the rollo assembly 4 is shown in an assembled state and in a closed position. Fig. 3 shows an exploded view of the rollo assembly of Fig. 2. As indicated, the rollo assembly 4 may act as a sun blind assembly and may be positioned below the movable roof panel 2a or, for example, below both the movable and fixed roof panel 2a, 2b. In other embodiments, there may be a single fixed transparent panel with the rollo assembly positioned there below. In order to mount it below the one or more roof panels, it may be connected to a frame of the roof assembly 1 of Fig. 1B, or it may form an integrated part of the roof assembly 1.

The rollo assembly 4 includes a rollo screen 20 and a winding tube 22 which is rotatable around a stationary axis of rotation 23. The rollo screen 20 extends substantially in a first direction D1 and is connected to an operating beam 24. In an opposite second direction D2, the rollo screen is connected to the winding tube 22. The rollo screen 20 may be wound off and on the winding tube 22. The winding tube 22 is provided with wire pulleys 25, 25' on opposite outer ends, which wire pulleys 25, 25' rotate concentric with the winding tube 22 about axis 23. For mounting on the respective outer ends of the winding tube 22 each wire pulley 25, 25' may have a tube support. At least one of the wire pulleys 25, 25' has a cavity into which an output shaft of a gearbox 26 may be releasable connected. The inner surface of the cavity and the outer surface of the shaft correspond to provide a form locked connection. The inverse, a wire pulley with shaft and gearbox with corresponding cavity, is also possible. A motor 27 is provided for driving rotation of the winding tube 22 via the gearbox 26.

The rollo assembly 4 further includes two parallel arranged rollo guides 28, 28' two reversal pulleys 29, 29' and two tensioning wires 30,30' on respective sides of the rollo screen 20. In addition, a pair of wire return elements 33, 33' and a pair of wire guide elements 34, 34', in this embodiment embodied as return pulleys 33, 33' and guiding pulleys 34, 34', are provided, of which elements of each pair are arranged on respective sides of the rollo assembly, to guide the tensioning wires from the wire pulleys 25, 25' to the operating beam 24. Each tensioning wire 30, 30' runs respectively from one of the wire pulleys 25, 25' reversing around one of the reversal pulleys 29, 29' and over a respective one of each pair of return pulleys 33, 33' and guiding pulleys 34, 34' towards the operating beam 24. Thereto, the reversal pulleys 29, 29' are attached to, or at least near, front ends of the respective guides 28, 28'. Accordingly, the reversal pulleys enable reversing the tensioning wires coming from the wire pulleys towards the operating beam.

In general, where appropriate, wire guide elements may take the form as rotatable wire guide elements, such as pulleys or other elements having e.g. a circular disk shape, or as fixed wire guide elements, as e.g. a groove, slot, notch or other shape provided in or on a guide element. In the example of Fig.3, the reversal pulleys 29, 29' and guiding pulleys 34, 34' are shown as separate elements, whereas they may also be integrated into single elements providing both functionalities.

Each tensioning wire 30, 30' is attached to one respective wire pulley 25, 25' with a first end, such that it may be wound onto and off said wire pulley 25, 25'. The tensioning wires 30, 30' are guided through or may at least run through the parallel guides 28. Each wire pulley 25, 25', which is attached to a first end of the respective tensioning wire 30, 30', is further equipped with spiral grooves, such that the tensioning wire 30, 30' may be wound onto and off said wire pulley 25, 25' in a controlled manner. The grooves are provided on a sloped part of the wire pulley 25, 25' and run in a spiral manner over the outer surface of the pulley. The tensioning wires 30, 30' are connected to one another via a springlike element, here a pull spring 31. The springlike element 31 is arranged to the front of the rollo assembly 4. In this embodiment, the springlike element 31 is positioned, relating to the x-direction, in front of the opening 3 that is to be covered by the rollo screen in the closed position. Thereto, a subassembly consisting of a rear frame part 6 and rollo guides 128, 128' may further include a front frame strut 8. The springlike element 31 may be positioned near, at or even within the front frame strut 8. The springlike element 31 is connected on each respective outer end to one pulley of a pair of return pulleys 33, 33'. Accordingly, each tensioning wire 130, 130' runs respectively from one of the wire pulleys 25, 25' through or along the respective rollo guide 128, 128' around one of the reversal pulleys 129, 129' towards the springlike element 131 and the thereto connected respective return pulley 33, 33'. And returns from the pulley 33, 33' over one of the guiding pulleys of the pulley pair 34, 34' towards the outer end of the operating beam 24 to which it is connected.

In other embodiments, further described below, the springlike element may be located at other positions while maintaining each of the tensioning wires under tension. Regardless of the position, the springlike element may also be implemented in various ways, such as a coil spring, a stretching rubber part, or other elastomeric material that facilitates a tensioning force.

When moving from the closed position to a partially or fully opened position, the rollo screen 20 is wound up on the winding tube 22 when it is rotated by the motor 27, while the tensioning wires 30, 30' are wound off from the wire pulleys 25, 25'. Accordingly, the operating beam 24 is pulled by the rollo screen 20 that is being wound up on the winding tube 22 along the rollo guides 28 in the second direction D2.

When moving from the partially or fully opened position to the closed position, the rollo screen 20 is wound off from the winding tube 22 when it is rotated by the motor 27, while the tensioning wires 30, 30' are wound up on the wire pulleys 25, 25'. The operating beam 24 is pulled by the tensioning wires 30, 30' along the rollo guides 25 in the first direction D1.

Hence, when the exposed surface of the rollo screen 20 shortens when wound up, the tensioning wires 30, 30' extend as they wound off from the wire pulleys 25, 25'. And when the exposed surface of the rollo screen 20 extends when wound off, the tensioning wires 30, 30' shorten as they wound up on the wire pulleys 25, 25'. The winding tube may be configured such that the rotational direction of the winding tube is chosen clockwise for one of the closing or opening motions, whereas consequently the rotational direction will be counterclockwise for the opposite opening or closing motion.

As will be understood in general, the wire pulleys are in a rotational sense in fixed engagement with the winding tube. The wire pulleys may also be removable in axial direction from the winding tube, for example by a multiple of protrusions that extend in radial direction from a part of the wire pulley and extend into slot holes provided in the winding tube. This will ensure that any rotational forces applied via the wire pulleys are transferred to the winding tube, and vice versa, depending on the gearbox output shaft setup. In a single motor setup, the torque of the gearbox output shaft may be transferred directly to one of the wire pulleys or, alternatively the gearbox output shaft may extend into the winding tube and engage the winding tube directly and engage the wire pulley indirectly. Either way, the tensioning wire attached to this wire pulley and the one on the opposite side of the winding tube are rolled up and unrolled from the respective wire pulley. As the respective tensioning wires are attached at their opposite side to the spring inside or at least near the operating beam, the spring will keep the rollo screen taut in every position that the operating beam may be in; in and/or between a fully unrolled and fully rolled up rollo screen. A dependable fixing between the winding tube and each of the wire pulleys is relevant in order to avoid slack in the rollo screen.

The rollo assembly 4 further includes a frame part 6 for carrying the winding tube 22 and wire pulleys 25, 25', the gear box 26 and motor 27, and for mounting the rollo guides 28. The frame part 6 enables alignment of the rollo guides 28, rollo screen 20 and winding tube prior to assembly in a vehicle roof; thereby creating a subassembly. The frame part 6 may further include at least one roll-off edge 7, intended to support the cloth of the rollo screen 20. In general, the roll-off edge, as well as the operating beam, may be curved in z-direction corresponding to a curvature of the vehicle roof. Accordingly, the roll-off edge is positioned such that it shapes and/or tensions the cloth of the rollo screen to follow the roof curvature. The positioning of the roll-off edge may further take in account that when the rollo screen is wound up or off from the winding tube, the diameter of the cloth on the winding tube reduces and accordingly the angle at which the cloth runs over the roll-off edge changes. In some configurations, one or more additional roll-off edges may be implemented.

A control unit 11 is schematically illustrated and is operatively coupled to the drive motor 27. The control unit 11 may be any kind of processing unit, either a software-controlled processing unit or a dedicated processing unit, like an ASIC, as well known to those skilled in the art. The control unit 11 may be a stand-alone control unit or it may be operatively connected to an-other control unit, like a multipurpose, generic vehicle control unit. In yet another embodiment, the control unit 11 may be embedded in or be part of such a generic vehicle control unit. Essentially, the control unit 11 may be embodied by any control unit suitable for, capable of and configured for performing operation of the drive motor 27 and thus the movable rollo assembly 4. Preferably, the control unit 11 is configured for monitoring an operating parameter of the motor indicative of speed of the winding tube and for detecting whether the operating parameter crosses a threshold value. And further configured for generating a trigger signal for stopping the motor from driving the winding tube in response to the detection of a threshold crossing.

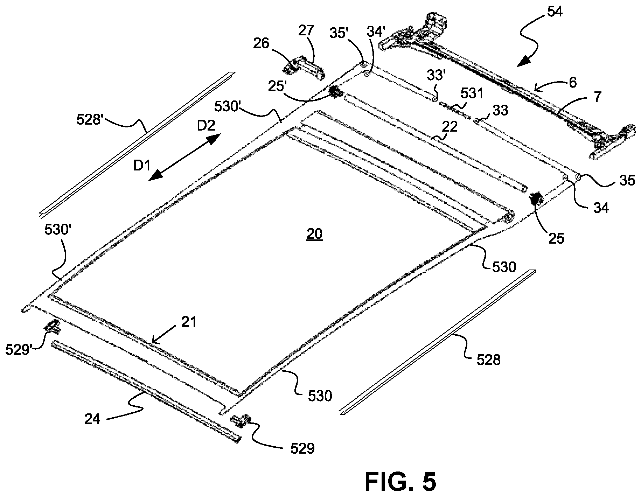

In Figs. 4 and 5, exploded views of other embodiments of direct driven rollo DDR assemblies are illustrated. In these, the same elements as in Figs. 2 and 3 have the same or similar reference numbers. The arrangement and variations of these elements as described in relation to Figs. 2 and 3 applies similarly. The difference between each of these embodiments resides in a different layout i.e. configuration of the tensioning wires 430 and, 530 and springlike element 431 and 531, which each will now be described in further detail.

Referring to Figs. 4 and 5, each of the embodiments of the rollo assembly 44, 54 again includes the rollo screen 20 and winding tube 22. The rollo screen 20 is again connected to the operating beam 24 and to the winding tube 22, and may be wound off and on the winding tube 22. The winding tube 22 is provided with the wire pulleys 25, 25' on opposite outer ends. At least one of the wire pulleys 25, 25' has the cavity into which the output shaft of the gearbox 26 may be releasable connected. And motor 27 drives rotation of the winding tube 22 via the gearbox 26.

Each of the embodiments of the rollo assembly 44, 54 again includes the frame part 6 for carrying the winding tube 22 and wire pulleys 25, 25', the gear box 26 and motor 27, and for mounting the rollo guides (428,428'; 528, 528'). The frame part 6 enables alignment of the rollo guides, rollo screen 20 and winding tube prior to assembly in a vehicle roof; thereby creating another subassembly. The frame part 6 further includes at least one roll-off edge 7, intended to support the cloth of the rollo screen 20, similar as has been previously described in detail above.

Referring to Fig. 4, the springlike element 431 is arranged to the rear of the rollo assembly 44. Preferably positioned, relating to the z-direction, underneath the roll-off edge 7 of the frame part 6, while also, relating to the x-direction, in front of the winding tube 22. The rollo assembly 44 includes two reversal pulleys 429, 429' and two tensioning wires 430, 430' on respective sides of the rollo screen 20. In addition, a pair of wire return elements 33,33' and two pairs of wire guide elements 34, 34' and 35,35' are provided, here embodied as pulleys, of which elements of each pair are arranged on respective sides of the rollo assembly, to return and guide the tensioning wires from the wire pulleys 25, 25' to the operating beam 24. The springlike element 431 is connected on each respective outer end to one return pulley of the pair of return pulleys 33, 33'. Each tensioning wire 430, 430' runs respectively from one of the wire pulleys 25, 25' forward over one of the pulleys of the guiding pulley pair 34, 34' towards the spring 431 and the thereto connected respective return pulley 33, 33'. And back from the spring 431 over one of the guiding pulleys of the guiding pulley pair 35, 35', to continue through or along the respective rollo guides around one of the reversal pulleys 429, 429' towards the operating beam 24.

Referring to Fig. 5, the springlike element 531 is arranged to the rear of the rollo assembly 54. In this embodiment, the springlike element 531, relating to the x-direction, is positioned in rear of the winding tube 22. The springlike element 531 may be positioned, relating to the z-direction, underneath the roll-off edge 7 of the frame part 6, or it may be positioned underneath or within a rear beam of the frame part 6. The rollo assembly 54 includes two reversal pulleys 529, 529' and two tensioning wires 530,530' on respective sides of the rollo screen 20. One pair of wire return elements 33,33' and two pairs of wire guide elements 34, 34' and 35,35' are provided, each embodied as pulleys, of which pulleys of each pair are arranged on respective sides of the rollo assembly, to guide the tensioning wires 530, 530' from the wire pulleys 25, 25' to the operating beam 24. The springlike element 531 is connected on each respective outer end to one return pulley of the pair of return pulleys 33, 33'. Each tensioning wire 530, 530' runs respectively from one of the wire pulleys 25, 25' rearward over one of the pulleys of the guiding pulley pair 34, 34' towards the spring 531 and the thereto connected respective return pulley 33, 33'. And back from the spring 531 over one of the guiding pulleys of the guiding pulley pair 35, 35', to continue through or along the respective rollo guide around one of the reversal pulleys 529, 529' towards the operating beam 24.

Referring to Figs. 4-5, each tensioning wire 430, 430'; 530, 530' is attached to one respective wire pulley 25, 25' with a first end, such that it may be wound onto and off said wire pulley 25, 25'. Each wire pulley 25, 25', which is attached to a first end of the respective tensioning wire 30, 30', is further equipped with spiral grooves, such that the tensioning wire 30, 30' may be wound onto and off said wire pulley 25, 25' in a controlled manner. The grooves are provided on a sloped part of the wire pulley 25, 25' and run in a spiral manner over the outer surface of the wire pulley. The tensioning wires 30, 30' are attached with their respective other, second ends, to the operating beam 24.

When moving from the closed position to a partially or fully opened position, the rollo screen 20 is wound up on the winding tube 22 when it is rotated by the motor 27, while the tensioning wires 30, 30' are wound off from the wire pulleys 25, 25'. Accordingly, the operating beam 24 is pulled by the rollo screen 20 that is being wound up on the winding tube 22 along the rollo guides 28 in the second direction D2.

When moving from the partially or fully opened position to the closed position, the rollo screen 20 is wound off from the winding tube 22 when it is rotated by the motor 27, while the tensioning wires 430, 430'; 530, 530' are wound up on the wire pulleys 25, 25'. The operating beam 24 is pulled by the tensioning wires 430, 430'; 530, 530' along the rollo guides 25 in the first direction D1.

Where appropriate, wire guide elements may take the form as rotatable wire guide elements, such as pulleys or other elements having e.g. a circular disk shape, or as fixed wire guide elements, as e.g. a groove, slot, notch or other suitable shape. In the examples of Figs. 4 and 5, the pairs of wire guide elements 34, 34' and 35,35' are shown as separate elements, whereas they may also be integrated into a single element providing both functionalities. For example by having one cylindrical element having two separate circular grooves running circumferential over the surface of the cylindrical element. This would then preferably be a fixed guide element. An axis of the cylindrical element may preferably be aligned with the z-direction.

In each of the embodiments of Figs. 3-5, the springlike element is positioned at another location. This facilitates for a freedom of design and to optimize the space required for the rollo assembly. For example, as the springlike element is no longer located inside the operating beam, this operating beam may be structured much thinner or flatter in comparison to prior art embodiments.

In addition, the arrangement of the tensioning wires in each of the embodiments disclosed in relation to Figs. 3-5, allows guiding the tensioning wires more or less in a substantially horizontal plane. Accordingly, the pulleys provided may also be arranged as a substantially flat or disclike shape, as any changes in direction for guiding the wires mainly fall within such horizontal plane.

While the tensioning wires wound off and up of the wire pulleys, the angle at which the wires leave the wire pulley towards the first guiding pulley changes. This change in angle may occur both in z-direction as in y-direction, in particular In case of a conical shaped wire pulley with spiraling wire groove. In embodiments wherein the tensioning wire is to enter the rollo guide directly, this requires some distance between wire pulley and guiding pulley in order to accommodate for this change in angle and to prevent wear and tear of the wire against edges or sides of the rollo guide . In embodiments as disclosed in relation to Figs. 4 and-5 particularly, the additional wire guide elements alleviate this as they allow for a more constant angle and/or path of the tensioning wires upon entering each respective rollo guide. That is a reduction in the change of angle at which the tensioning wires will approach the rollo guide. Accordingly, the additional wire guide elements allow for a better alignment of the path of tensioning wires and the respective rollo guides.

The positioning of the springlike element outside of the operating beam allows for more freedom of design of that springlike element. This is in particular of relevance as when monitoring the speed of the winding tube. When the rollo screen moves in the closing direction and bumps onto the end of the rollo guides or the edge of the opening, the operating beam halts and the rollo screen may start sagging if the motor and winding tube are not halted. Due to the arrangement with the springlike element, after an initial rather abrupt bump a more gradual drop follows as the spring will absorb some of the impact energy, as a result the speed of the motor will not drop to stand still immediately but may decrease gradually. Thus, the springlike element may seem to provide a type of cushioning effect. This cushioning effect may be detected more easily and may be used as trigger to stop the motor driving the winding tube. The springlike element positioned as in the embodiments of Figs. 3-5 enables that it may be designed such as to provide a specific influence on the speed of the winding tube.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in expectedly any appropriately detailed structure. In particular, features presented and described in separate dependent claims may be applied in combination and any advantageous combination of such claims are herewith disclosed.

Further, the terms and phrases used herein are not intended to be limiting, but rather to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly.

## Claims

1. Roller blind assembly (4) for a vehicle, comprising:
a winding tube (22) configured to be directly driven by a motor (27);
a rollo screen (20) configured to be wound up and off on the winding tube (22) at one side and having an operating beam (24) at an opposite side;
a pair of parallel rollo guides (28) for guiding the rollo screen (20);
the rollo screen (20) being movable along the rollo guides (28) between a closed position and an opened position by driving the winding tube (22);
wire pulleys (25, 25') on opposite outer ends of the winding tube (22);
a springlike element (31) having a wire return element (33, 33') arranged on each respective outer end;
tensioning wires (30, 30') connected at first ends to one of the respective wire pulleys (25, 25') and connected at second ends to the operating beam (24); and
wherein the tensioning wires (30,30') run along the wire return elements (33, 33') of the springlike element (31) such that the springlike element (31) tensions the tensioning wires (30, 30').

2. Roller blind assembly according to claim 1, further comprising:
at least two pair of guiding wire guide elements for guiding each of the tensioning wires from one respective wire pulley (25. 25') through or along the rollo guides via the respective wire return element (33, 33') of the springlike element (31) towards a respective outer end of the operating beam (24).

3. Roller blind assembly according to claim 1 or 2, further comprising reversal pulleys (29, 29') near a front end of each respective rollo guide (28, 29') for reversing the tensioning wires (30, 30') coming from the wire pulleys (25, 25') towards the operating beam (24).

4. Roller blind assembly according to any of claims 1-3, further comprising a frame part (6) arranged for carrying the winding tube (22) and wire pulleys (25, 25') and having a roll-off edge (7).

5. Roller blind assembly according to any of claims 1-4, wherein the springlike element (31) is arranged at a front of the rollo assembly (4).

6. Roller blind assembly according to any of claims 1-4,
wherein the springlike element (431, 531) is arranged to the rear of the rollo assembly (44, 54); and
further arranged:
in front of the winding tube (22); or
in rear of the winding tube (22).

7. Roller blind assembly according to claim 5, wherein the springlike element (431, 531) is further arranged:
underneath the roll-off edge (7); or
above the roll-off edge (7).

8. Roller blind assembly according to claim 4, wherein reversal pulley (29, 29') and wire guide element (34, 34') on the same side of the rollo screen are arranged as separate elements or as an integrated element.

9. Roller blind assembly according to claim 5 or 6, wherein wire guide elements (34, 34'; 35, 35') on the same side of the rollo screen are arranged as separate elements or as an integrated element.

10. Roller blind assembly according to claim 7 or 8, wherein the integrated element is a cylindrical element, having two separate circular grooves running circumferential over a surface thereof.

11. Roller blind assembly according to any of the preceding claims, wherein the wire guide elements (34, 34';35, 35') have a substantially flat or disc-like shape; and
the wire guide elements (34, 34';35, 35') are arranged such that the tensioning wires (30, 30') are guided in a substantially horizontal plane.

12. Roller blind assembly according to any of the preceding claims, wherein the rollo guides (28) extending beyond a length of rollo screen (20) in the closed position.

13. Roller blind assembly according to any of the preceding claims, further comprising:
a control unit (11) configured for:
monitoring an operating parameter of the motor (27) indicative of speed of the winding tube (22);
detecting whether the operating parameter crosses a threshold value;
generating a trigger signal for stopping the motor (27) from driving the winding tube (22) in response to the detection of a threshold crossing.

14. A roof and roller blind assembly for a vehicle, comprising:
a roof assembly (1) comprising a transparent and/or movable roof panel (2a, 2b);
a roller blind assembly (4, 44, 54) according to any of the preceding claims.
